# EUROPEAN PATENT APPLICATION

(11) **EP 2 469 479 A1**
(43) Date of publication of application: **27.06.2012**
(21) Application number: 10196192.8
(22) Date of filing: 21.12.2010
(51) Int. Cl.: G07C 9/00, H04L 29/06

(54) **Intrusion detection**

(71) Applicant: ABB Research Ltd., 8050 Zürich (CH)
(72) Inventor: Hadeli, Hadeli, 5400 Baden (CH); Schierholz, Ragnar, 5436 Würenlos (CH); Obermeier, Sebastian, 5107 Schinznach-Dorf (CH)
(74) Representative: ABB Patent Attorneys

(57) **Abstract**

The present invention is concerned with an Intrusion Detection System (IDS) for an Industrial Automation and Control System (IACS) that takes into account context information representative of conditions or constellations beyond the limits of the IACS. The context information includes, but is not limited to, shift plans describing which work-force individuals should be active on the system, information from the physical access control describing which individuals have local access to different parts of the system and which individuals are physically present where in the system, approved work orders describing which individuals have permission to perform which functions in the system or configuration switches that describe different use scenarios the system may be in and for which rule sets should be applied.

## Description

### FIELD OF THE INVENTION

The invention relates to the field of cyber security in information technology, and in particular to intrusion detection in industrial automation and control systems.

### BACKGROUND OF THE INVENTION

Intrusion Detection Systems (IDS) are installed at key locations within any kind of sensitive Information Technology (IT) infrastructure. They observe all network traffic, and evaluate the traffic based on predefined network traffic patterns. Whenever a single data packet or a combination of packets matches a defined pattern, the IDS conclude on an intrusion and raise a security alarm event.

Patent application WO 2010/069698 describes an IDS that monitors network traffic for deviation from a pattern or model of expected traffic (i.e. traffic known as non-malicious). In deterministic systems, such a model can be automatically derived from static system description or configuration data.

Integrated security systems allow concentrating physical security properties related to work-force individuals such as holidays, time and attendance schedules, or physical access control at a single place in order to allow monitoring.

Industrial Automation and Control Systems (IACS) are used extensively to protect, control and monitor industrial processes in industrial plants for e.g. processing goods or generating power, as well as to protect, control and monitor extended primary systems like electric power, water or gas supply systems including their respective substations. An IACS generally has a large number of process controllers, sensors, and actuators distributed in an industrial plant or over an extended primary system, and communicatively interconnected via an industrial communication system. Overall, an IACS may easily comprise thousands of assets including secondary devices (controllers, sensors, actuators, communication network equipment) and individual device components thereof, together making up the infrastructure or hardware part of the IACS. As with most IT systems, the standard approach in detecting intrusion into IACS is by monitoring, observing and analyzing network traffic. However, this does not always reveal the intrusion especially when the intruder is a disgruntled employee who has legitimate access to the IACS and/or when the intrusion involves tampering with the physical infrastructure of the IACS or the primary equipment.

### DESCRIPTION OF THE INVENTION

It is therefore an objective of the invention to detect intrusion attempts into an Industrial Automation and Control System (IACS) based on unsuspicious network traffic patterns. This objective is achieved by an intrusion detector and a method of detecting intrusion according to the independent claims. Preferred embodiments are evident from the dependent patent claims.

According to the invention, an Intrusion Detection System (IDS) takes into account context information, or non-network related information, representative of conditions or constellations beyond the limits of the IACS, and exceeding a mere observation of network traffic patterns. The integration of context information sources into cyber intrusion detection relates the information of the network packet to different type of non-network information, i.e. information which describes a status or situation of the system, but which is not part of the network traffic as observed by intrusion detection/prevention sensors. This information includes, but is not limited to, shift plans describing which work-force individuals should be active on the system, information from the physical access control describing which individuals have local access to different parts of the system and which individuals are physically present where in the system, approved work orders describing which individuals have permission to perform which functions in the system, or configuration switches that represent different use scenarios the system may be in and for which use scenarios different rule sets do apply. The IDS thus enhanced may also be called a context-aware security management component. The proposed invention relies on known usage patterns in an IACS as a special purpose system including typical day-to-day operations, deterministic information and approved modifications. It then detects deviations from this expected behaviour based on white lists of information implying that any information/commands that are used during operation of control systems are well-planned and follow a proper workflow and paperwork.

By way of example, network traffic caused by a maintenance engineer is legitimate traffic whenever the engineer is authorized to perform the maintenance and also present at the site. If, however, there was no approved request for maintenance, or no maintenance engineer is present while a local authentication request or local network traffic related to engineering activity is observed, this can be considered as an unauthorized attempt to cause harm. Likewise, a local attempt to log into the system by an operator who is currently on an approved vacation and for whom the physical access control system does not confirm presence at the site may be considered suspicious. In both examples, existing IDS can not signal an intrusion, as the network traffic caused by the maintenance engineer and the operator actually follow the predefined expected network traffic patterns and only the specific context points to a suspicious situation.

Integrating additional context or non-network information into intrusion detection and prevention systems enables security incidents to be defined more precisely, which ultimately reduces the occurrence of false negative errors and increases the reliability of automated identification of potentially malicious events or attacks.

The invention proposes a method of detecting intrusion into an Industrial Automation and Control System IACS adapted to be accessed by work force individuals such as operators and maintenance engineers who send network packets over a communication network to distributed and interconnected target devices of the IACS such as process controllers. The method comprises the steps of
- extracting packet source information such as an IP or MAC address, or a time of sending from a network packet,
- retrieving, or importing, from a work-force management or other supporting system handling both planning and tracking of work-force individuals, context or non-network information related to, or defined by, the extracted packet source information, and
- determining an intrusion or suspiciousness level based on the context information.

According to a preferred variant, a security configuration or rule-set is adapted in view of the context information. For instance, a security alarm threshold may be adjusted in order to limit information overload in case of an emergency. Or appropriate rule sets are activated allowing engineering accounts to be used and engineering protocols to be routed to the process controllers. In other words, a security configuration is adapted, based on retrieved context information, to specify legitimate and/or suspicious network traffic beyond the single network packet intrusion level. Corresponding rule-sets may subsequently be applied to all observed traffic in the IACS.

According to advantageous embodiments, the method comprises the steps of
- determining, from the extracted packet source information, a presumed sender employee or work-force individual,
- retrieving, from a physical access control system as a the work-force management system, a physical location or on-site presence of the employee at the time of packet sending as context information,
- correlating the physical location with further context information related to the sender employee and indicating sender employee office, shift plan, and/or work orders.

Hence, various types of context information may be correlated in order to consolidate, or determine, the system's current operational context and to detect suspicious situations based there upon. In particular, correlating context information from a physical access control system with other non-network data sources enables more refined detection of intrusion situations. By way of example, an operator whose shift has ended has not left the site according to the physical access control system and tries to operate certain commands that are harmful for the system. Or an individual is entering the site through a physical access control system but is not scheduled to work and does not have approved work orders.

The present invention also relates to a computer program product including computer program code for controlling one or more processors of an intrusion detection device adapted to be connected to a communication network of an industrial automation and control system, particularly, a computer program product including a computer readable medium containing therein the computer program code.

### BRIEF DESCRIPTION OF THE DRAWINGS

The subject matter of the invention will be explained in more detail in the following text with reference to preferred exemplary embodiments which are illustrated in the attached drawings, in which:
Fig.1 is a flowchart of the proposed intrusion detection systems integrating context or non-network packet information;
Fig.2 is a flowchart of an exemplary intrusion detection system correlating physical access information and organizational information.

### DETAILED DESCRIPTION OF PREFERRED EMBODIMENTS

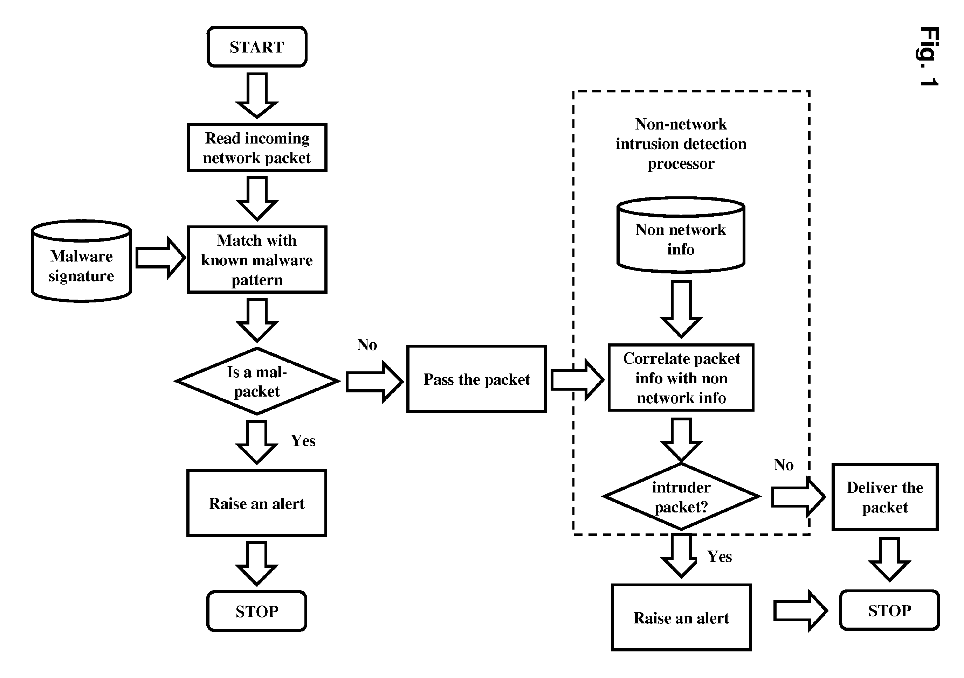

Fig.1 shows an intrusion detection system that matches incoming network packet with known mal-packet signature. The network traffic that is claimed to be clean by this step is injected into another process that basically correlates the information of the network packet with different type of non-network information.

Output of the network based evaluation is called pass network assessed traffic. The pass network assessed traffic is then injected into a processor called non-network intrusion detection processor.

Non-network or context-based intrusion detection processor is responsible to analyze the information of the network packet and correlate that with the non-networking information. The Non-network intrusion detection preprocessor is composed out of the following elements:
- Online context-information database for storing non-network operational information. This can be information from the human resources about personnel scheduling, physical access control information, etc.
- Information Correlator engine. This correlator engine responsible for correlating the network packet to the information in the real-time database. The goal is to discover whether there is a contradiction between the incoming network packets to the available non-network information. The information correlator engine will produce only the following conclusions, i.e. contradiction (YES) or no contradiction (NO).
- Alerting Alarm. This alerting alarm is used to raise an alarm should the correlator engine show a YES contradiction result.

Non-network information is information that describes the system situation, but is not part of the network traffic as it is observed by intrusion detection/prevention sensors. This includes, but is not limited to, shift plans describing which individuals should be active on the system, information from the physical access control describing which individuals have local access to different parts of the system, approved work orders describing which individuals have permission to perform which functions in the system or configuration switches that describe different use scenarios the system may be in, and for which different rule sets should be applied.

For instance, in some installations, a physical switch is deployed in the control system to enable engineering mode. Controllers only accept configuration changes when the switch is in engineering mode enabled position. The proposed invention takes the position of that switch into account, and can apply the appropriate rule set allowing engineering accounts to be used, allowing engineering protocols to be routed to the controllers, etc.

In another instance, the control system detects an emergency situation by its supervisory functions or by a manual command of an operator/supervisor. The proposed invention takes this context into account and switches into emergency rule set. For example, this rule set could raise the notification threshold on security alarms in order to reduce the information overload on operators handling the emergency situation. Another example can be where the normal operation rule set does not allow remote access while the emergency rule set allows remote access after supervisor acknowledgement.

A first example describes an extension to the network-based IDS by considering the physical access information and organizational/human resources information. Physical access information implies that physical access to any door (entry/leave) is logged and registered in the system. Organizational/human resources information implies vocation and sickness information are properly register in the system. The non-network intrusion detection processor is designed as follows:
● The real-time database contains the most updated information on:
   1. General employee information: employeeID, firstname, lastname, IP address of the employee computer, room number
   2. Physical access information: employeeID, currentLocation, enteringTime, leavingTime
   3. Organizational/human resources information: employeeID, startVocation, endVocation
● The correlation engine works as follows:
   1. It retrieves the source address of the network packet, for instance 10.10.10.1, and derives employee-ID there from
   2. It then checks whether the employee is on vacation or not by querying the organizational/human resources information. If the employee is on vacation, then an alert is raised. Otherwise, query whether the employee is in his office. If from the physical access information, the employee is not in the office, raise an alert. Otherwise, pass the message.

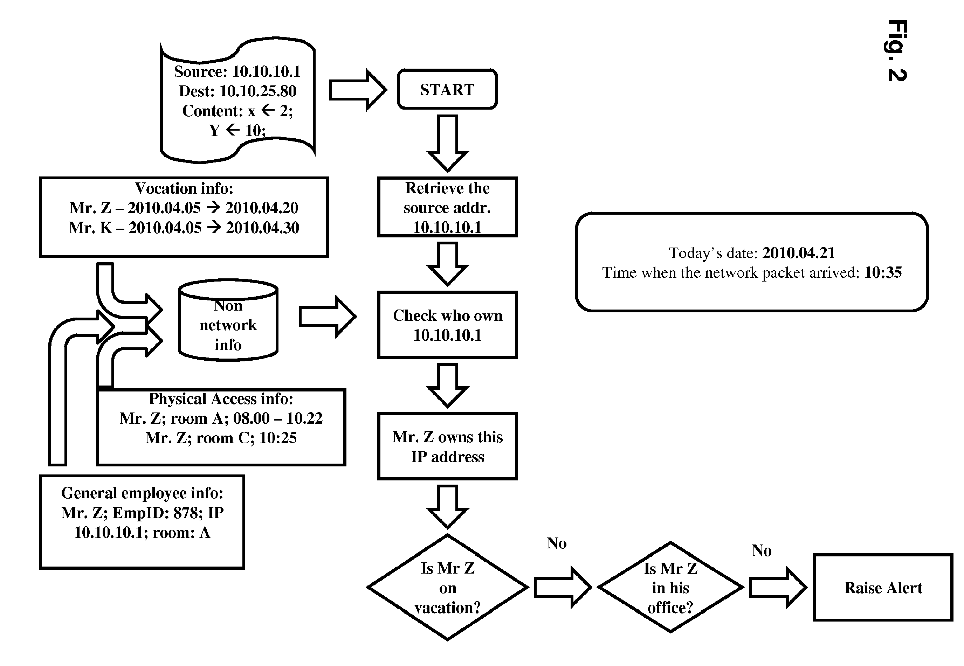

Fig.2 depicts an example of this realization:
1. An employee named Mr. Z has the following personal information:
   a. Employee ID and role: z_878; Engineer
   b. Location and IP address of the engineering server: Room A; 10.10.10.1
2. His organizational/human resources information is:
   a. Vacation period: 2010.04.05 - 2010.04.20
3. His physical access information is:
   a. 2010.04.21 07.54-arrives at the facility
   b. 2010.04.21 08.00 - enters Room A
   c. 2010.04.21 10.22 - leaves Room A
   d. 2010.04.21 10.25 - enters Room C
4. At time 10.35, the IDS system detects traffic to change parameters of the system coming from address 10.10.10.1. After analysis of the traffic's content, the IDS resumes that it is valid and not mal-traffic.
5. The network packet is then analyzed by the disclosed invention. The following steps show how the evaluation is done by the non-network intrusion detection system processor:
   a. The processor queries the source address and the timestamp of the network packet. *It comes from 10.10.10.1 at 10:35*
   b. The processor access the employee information to find out who owns the address 10.10.10.1. *Mr. Z owns the IP address 10.10.10.1, the computer resides in room A.*
   c. The processor access the organizational information to check the absences of Mr. Z. *It finds out that Mr. Z is no longer on vacation.*
   d. The processor checks the physical access information of Mr. Z. *It finds out that Mr. Z is in room C at 10:35.*
   e. The processor raises an alarm since it is unknown who sent the network packet from 10.10.10.1 at 10:35.
6. Alternatively, or complementary, the same result or conclusion can be arrived at via the following rule set instance generated based on the above-mentioned context information:
   a. At time: 2010.04.21 07.54 → Deny any traffic from z_878
   b. At time: 2010.04.21 08.00 → Allow Engineering Traffic from z_878 and only from computer address 10.10.10.1. Validity 2010.04.21 07.54 until 2010.04.2117.00
   c. At time: 2010.04.21 10.22 → Deny any traffic from z_878
   d. At time: 2010.04.21 10.25 → Deny any traffic from z_878

In a second example, an extension to the network-based IDS is by accommodating information from the approved work orders from a change management system. Information from the approved work orders from a change management system imply a formal description of the approved work orders to change certain parameters on a certain entity/resource in the system by an operator. The non-network intrusion detection processing is designed as follows:
● The database that stores the formal description of the approved work orders. The formal description contains the following items:
   1. OrderID
   2. EmployeelD
   3. ApprovalID (supervisorID)
   4. Time of approval
   5. EntitylD/ResourcelD of which a change is to be made
   6. Original parameter/settings
   7. New parameter/settings
   8. Time validity for conducting the task
● The correlation engine works as follows:
   1. From the network packet, it retrieves the following information: orderID, employeeID, current time, entitylD/resourcelD, and new parameter settings
   2. It then checks whether the information contradict with the formal description that is stored in the database. If for instance, the current time is not within the valid time range for conducting the task, raise an alert.

Otherwise, pass the message.

An example of this realization can be shown as follows:
1. An employee named Mr.K receives the following work order to change 5 processing parameters on the boiler B in their factory. The following shows the formal description of the order:
   ■ order!D:Boi_234234
   ■ employeelD:898
   ■ ApprovaIID:542
   ■ Time of approval: 20100610 15:00
   ■ EntitylD: Boi_B
   ■ Original parameters setting: p=45; q=112; r=87; s=23; t=9
   ■ New parameters setting: p=40; q=110; r=88; s=23; t=9
   ■ Time validity: 20100610 18:00 → 20100610 19:00
2. After receiving an order on 20100610 15:25, Mr. K goes back to his desk. Since he already has another commitment this evening, he thinks of changing the parameters immediately. He fires up the SCADA console and change the parameters.
3. The IDS system detects traffic to change parameters of system coming from 10.10.10.5. After analysis the traffic's content, the IDS resumes that it is valid and not a malicious traffic.
4. The network packet is then analyzed by the disclosed invention. The following steps show how the evaluation is done by the non-network intrusion detection system processor:
   ■ The processor queries the orderlD.
   ■ The processor queries the entitylD. It is Boi_B. From the main database, the processor knows that the relevant controller for Boi_B is located at 10.10.80.1. The traffic destination is 10.10.80.1. This is a valid destination and matches the information from the approved work order in the database.
   ■ The processor queries the parameter settings from the network packet and compares it to the formal description in the database. Instead of sending p=40; q=110; r=88; s=23; t=9, Mr. K sends p=40; q=110; r=88; s=23; t=19. The system raises an alert and drops the package.
   ■ The processor queries the time validity to execute the command. Since Mr. K executes the command earlier than it should be, the system raises an alert and drop the package.
5. Alternatively, or complementary, the same result or conclusion can be arrived at via the following rule set instance generated based on the above-mentioned context information:
   ■ When the change order is generated, the Context Aware Security Manager is informed and a new rule is generated specific for this task. The rule is as follows:
   ■ Allow traffic from 898 with the following content {Boi_234234, 542, 20100610 15:00, p=40; q=110; r=88; s=23; t=9} to Boi_B. Validity: 20100610 18:00 → 20100610 19:00

## Claims

1. A centralised intrusion detector for an Industrial Automation and Control System IACS adapted to be accessed by work-force individuals sending network packets over a communication network to target devices of the IACS, wherein the detector is adapted to determine an intrusion level of a single network packet by evaluating context information retrieved from a work-force management system and related to packet source information of the network packet.

2. The centralised intrusion detector according to claim 1, **characterized in that** the context information includes a physical location of a work-force individual determined as presumed sender of the network packet.

3. A method of detecting intrusion into an Industrial Automation and Control System IACS adapted to be accessed by work force individuals sending network packets over a communication network to target devices of the IACS, comprising
- extracting packet source information from a network packet,
- retrieving, from a work-force management system, context information related to the extracted packet source information, and
- determining an intrusion level based on the context information.

4. The method according to claim 3, comprising
- depending on the retrieved context information, determining and applying to the IACS an adapted security configuration.

5. The method according to claim 3, comprising
- determining, from the extracted packet source information, a sender employee, and
- retrieving, from a physical access control system, a physical location of the employee as context information.

6. The method according to claim 4, comprising
- correlating the physical location with further context information related to the sender employee.
